# EUROPEAN PATENT APPLICATION

(11) **EP 2 154 113 A2**
(43) Date of publication of application: **17.02.2010**
(21) Application number: 09251987.5
(22) Date of filing: 13.08.2009
(51) Int. Cl.: C02F 1/00, C02F 1/66

(54) **Device for chemically treating condensate from a domestic boiler**

(30) Priority: 13.08.2008 GB 0814804
(71) Applicant: Alpha Fry Limited, Woking, Surrey GU21 5RZ (GB)
(72) Inventor: Watson, Neil, West Sussex, RH16 1LF (GB); Smith, Darren, Hammond Close, Newmarket, Suffolk CB8 0AZ (GB)
(74) Representative: Merrifield, Sarah Elizabeth

(57) **Abstract**

A device (10) is described for chemically treating condensate from a domestic boiler. The device (10) comprises a housing (20) with an inlet (80) and outlet (90) and containing an agent (280) for chemically treating the condensate. A weir is arranged with respect to the housing (20) so as to define a first volume within the housing (20) which must be filled with the condensate before flow of the condensate can be established between the inlet (80) and the outlet (90). The weir comprises a hollow member (30) located in the housing with a closed end (230), an open end (220) and a side wall extending therebetween. The side wall is provided with at least one opening (250) which is arranged to define the first volume within the hollow member (30) and to allow the condensate to pass from the interior of the hollow member (30) to the exterior thereof when the first volume is filled with condensate. The opening (250) is arranged to define the first volume regardless of whether the hollow member (30) is oriented in use horizontally, vertically with the inlet uppermost or at an angle between the horizontal and vertical with the inlet uppermost.

## Description

The present invention relates to a device for chemically treating condensate from a domestic boiler.

Acidic condensate is generated by condensing boilers as an undesirable by-product of the combustion process. Typically, the condensate has a pH of around 3.5 and therefore should be treated before it passes into the wastewater system to avoid pollution.

A unit for treating the acidic condensate of a condensing boiler is known from GB 2 425 739. This document discloses a replaceable unit which can be fitted "in-line" into the existing pipe work, usually the condensate outlet, of a condensing boiler. The unit comprises a housing containing calcium carbonate chippings which are retained in the housing by mesh screens located at either end of the housing. In use, the acidic condensate from the boiler enters the unit via an inlet end of the housing where its pH is raised, by reaction with the calcium carbonate chippings, as it passes through the housing. The resulting solution then flows out of the housing and into a drain.

In practice, it has been found that the condensate exiting the prior art unit is not sufficiently neutralised such that wastewater can still be contaminated by acidic condensate exiting the unit.

According to a first aspect of the present invention, there is provided a device for chemically treating condensate from a domestic boiler, comprising: a housing having an inlet and an outlet, wherein the housing contains an agent for chemically treating the condensate; and a weir arranged with respect to the housing so as to define a first volume within the housing which must be filled with the condensate before flow of the condensate can be established between the inlet and the outlet, wherein the weir comprises a hollow member located in the housing and having a closed end, an open end, and a side wall which extends between the closed and open ends, wherein the side wall is provided with at least one opening which is arranged to define the first volume in the hollow member and to allow the condensate to pass from the interior of the hollow member to the exterior of the hollow member when the first volume is filled with the condensate, and wherein the at least one opening is arranged to define a first volume regardless of whether the hollow member is oriented in use horizontally, vertically with the inlet uppermost, or at an angle between the horizontal and the vertical with the inlet uppermost.

The present invention is advantageous as the average residence time of the condensate within the device is increased over prior art units. The extent of reaction between the condensate and the agent is therefore increased. Furthermore, the device will operate in different orientations.

Preferably the agent for chemically treating the condensate is located within the hollow member. This is beneficial as the agent may be readily replaced by exchanging the spent hollow member for a new one.

The at least one opening preferably comprises a plurality of perforations. This is particularly advantageous when the agent is in the form of chippings or particles since small chippings or particles can readily be retained within the cartridge.

Preferably the plurality of perforations extend around less than half the circumference of the hollow member.

Preferably the hollow member is a replaceable cartridge to facilitate replacement of the agent for treating the condensate.

In a preferred embodiment the agent for chemically treating the condensate comprises chips of one or more materials. The use of chips is beneficial they are relatively inexpensive to produce and provide a large surface area for the condensate to react with. In alternative examples, the agent for chemically treating the condensate may comprise a coating on the interior of the housing or cartridge, a gel, jelly or resin, or a porous matrix which comprises, or carries, the agent or any other suitable material or carrier. It will be understood that some of the volume within the housing, or cartridge, may be occupied by the agent for chemically treating the condensate. For example, by the calcium carbonate chippings. In such cases, it will be understood that the first volume within the housing, or cartridge, which is defined by the weir, is made up of space not occupied by the agent. For example, the interstitial spaces between the calcium carbonate chippings.

The agent for chemically treating the condensate preferably comprises chips of calcium carbonate which are inexpensive and readily available.

In a preferred embodiment the device is arranged to be fitted into existing pipe work to facilitate retrofitting of the device.

According to a second aspect of the present invention there is provided a kit of parts for forming a device as set out above for chemically treating condensate from a domestic boiler, comprising: a housing having an inlet and an outlet, wherein the housing is arranged to contain an agent for chemically treating the condensate; and a weir arranged to be located with respect to the housing so as to define a first volume within the housing which must be filled with the condensate before flow of the condensate can be established between the inlet and the outlet, wherein the weir comprises a hollow member located in the housing and having a closed end, an open end, and a side wall which extends between the closed and open ends, wherein the side wall is provided with at least one opening which is arranged to define the first volume in the hollow member and to allow the condensate to pass from the interior of the hollow member to the exterior of the hollow member when the first volume is filled with the condensate, and wherein the at least one opening is arranged to define a first volume regardless of whether the hollow member is oriented in use horizontally, vertically with the inlet uppermost, or at an angle between the horizontal and the vertical with the inlet uppermost.

In the kit of parts the hollow member is preferably arranged to contain the agent for chemically treating the condensate.

According to a third aspect of the present invention there is provided a cartridge for a device as set out above for chemically treating condensate from a domestic boiler, the cartridge comprising a hollow member having a closed end, an open end, and a side wall which extends between the closed and open ends, wherein the side wall is provided with at least one opening which is arranged to allow the condensate to pass from the interior of the cartridge to the exterior of the cartridge only when a predetermined volume of condensate is contained within the cartridge, and wherein the at least one opening is arranged to define a first volume regardless of whether the cartridge is oriented in use horizontally, vertically with the inlet uppermost, or at an angle between the horizontal and the vertical with the inlet uppermost.

The at least one opening preferably comprises a plurality of perforations.

In a preferred embodiment, the cartridge contains an agent for chemically treating the condensate.

According to a fourth aspect of the present invention there is provided a method for chemically treating condensate from a domestic boiler, using a device as set out above comprising: supplying condensate to the inlet of a housing which contains an agent for chemically treating the condensate; and preventing the condensate from exiting the housing until a predetermined volume of condensate is contained within the housing.

An example of a device in accordance with the present invention will now be described with reference to the accompanying drawings in which:
Figure 1 is an exploded side view of the device;
Figure 2 is a cross-sectional view of the device;
Figure 3 is an enlarged side view of the cartridge portion of the device; and
Figure 4 is an enlarged plan view of the cartridge of Figure 3.

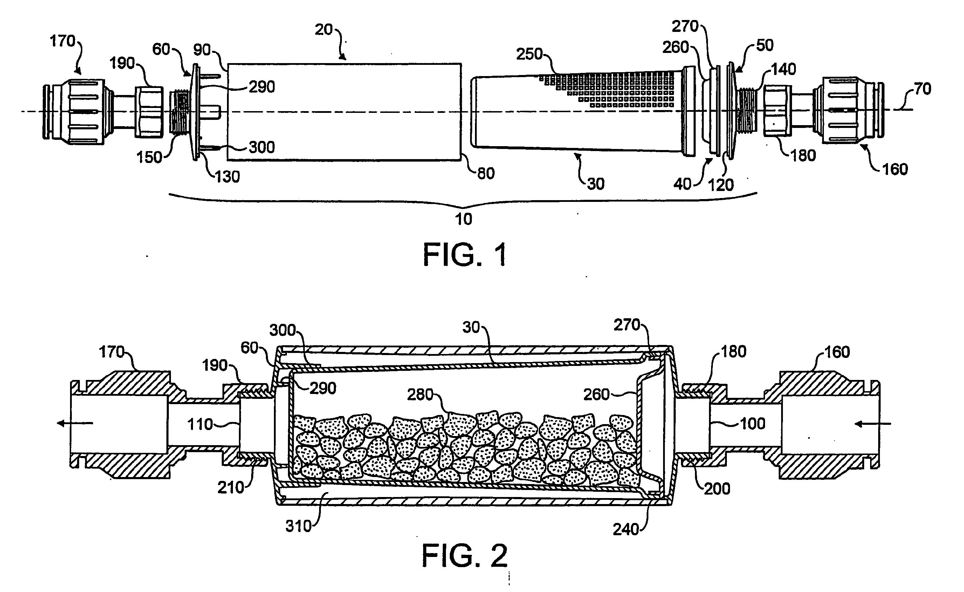

Referring to Figures 1 and 2, a device 10 is shown in a horizontal orientation. In the description which follows, the features and operation of the device 10 are described on the basis of a horizontal orientation, and the terms "top", "bottom", "upper", "lower" etc. are used to refer to various features of the device 10 for simplicity. However, it is to be understood that, in use, the device 10 may be positioned in a horizontal, sloping, or vertical orientation without affecting the nature of the invention. The use of the terms "top", "bottom", "upper", "lower" etc. are therefore not to be considered as limiting.

The device 10 comprises a housing 20 which consists of a hollow cylinder having an inlet opening 80 at one end and an outlet opening 90 at the other end. The housing 20 contains a cartridge 30 which itself contains a neutralising agent 280 in solid form. In this example, the neutralising agent 280 comprises calcium carbonate chippings. However, it will be appreciated that any other suitable neutralising agent may be used, for example, sodium metaborate or magnesium carbonate.

The cartridge 30 has a fluid permeable cap 40, and the housing 20 has first and second end caps 50, 60. The end caps 50, 60 facilitate connection of the device 10 to a pipe work system as will be described in grater detail below. The housing 20, cartridge 30, cartridge cap 40, and end caps 50, 60 are each aligned on a common axis 70 and are preferably made from a moulded plastic such as polypropylene.

First and second end caps 50, 60 define an inlet 100 and an outlet 110 respectively. The end caps 50, 60 are provided with annular flanges 120 and 130 which fittingly engage with the inlet and outlet openings 80, 90 of the housing 20. End caps 50, 60 are also provided with external screw threads 140, 150 for engagement with connectors 160, 170 as will be described in greater detail below.

The device 10 is arranged to be attached to an existing pipe work system via the connectors 160, 170. The connectors 160, 170 each comprise collars 180, 190 which have internal screw threads 200, 210 for connection to screw threads 140, 150 of the end caps 50, 60. In use, connector 160 attaches to a condensate pipe (not shown) leading from the boiler (not shown), and connector 170 attaches to a pipe (not shown) leading to the drain. The connectors 160, 170 shown in Figures 1 and 2 are standard commercially available connectors which are well known to persons skilled in the art. It will be appreciated that any other suitable connector could be used.

In use, the device 10 is fitted into existing pipe work by connecting collars 180, 190 to threads 140, 150, respectively, of end caps 50, 60. The reverse process is used to remove the device 10.

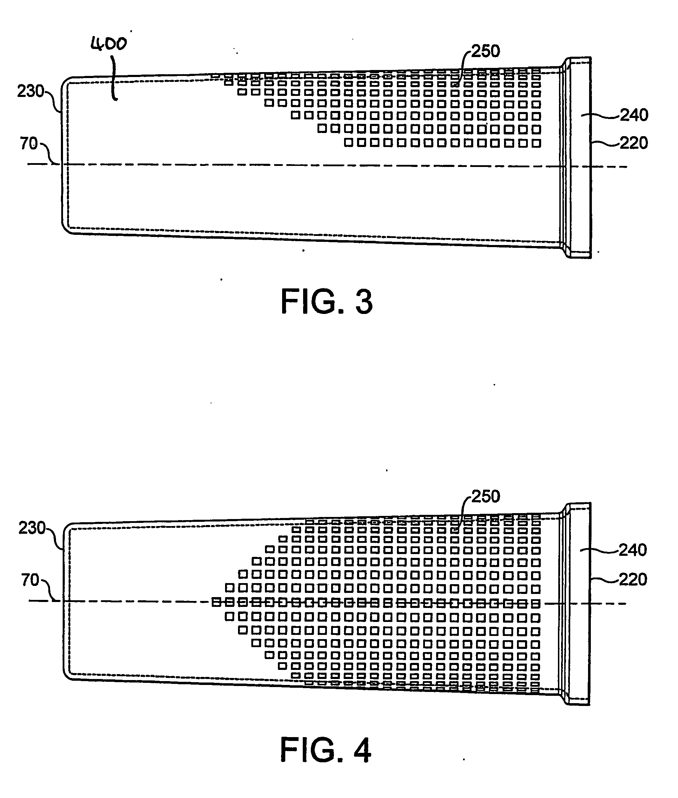

Referring now to Figures 3 and 4, the cartridge 30 comprises a hollow tapered cylinder which is open at a first, inlet, end 220, and closed at the other end 230. An annular flange 240 is provided at the first end 220. As shown in Figure 2, the annular flange 240 is sized to fittingly engage with the inner surface of the housing 20.

The cartridge 30 is provided with a pattern of perforations 250 located, according to the orientation of Figure 3, on the upper half of the cartridge 30. In this example, the perforations 250 are square in cross-section and arranged in rows which extend substantially from the first end 220 of the cartridge 30 towards the closed end 230. The rows of perforations 250 each stop short of the closed end 230 to define a closed portion 400 proximate the closed end 230 of the cartridge 30.

In the example pattern shown, the rows of perforations 250 located at the outermost edge of the pattern are the shortest rows, having the least number of perforations 250, and the centremost row is the longest row, the rows increasing in length between the edges of the pattern and its centre. As will be understood from the description which follows, the pattern of perforations described above is only one example of the configurations possible. In particular, it will be understood that the perforations 250 may be circular in cross-section, or any other suitable shape, and that the rows may be of equal length or may increase in length from the centre of the pattern to the edges. Although a symmetrical pattern is preferred, its is not essential to the invention that the pattern of perforations is symmetric.

As shown in figures 1 and 3, the perforations 250 are located on the upper half of the cartridge 30 only. Thus, the perforations 250 extend around half or less than half of the circumference of the cartridge 30. In addition, the rows of perforations 250 preferably extend only part of the way along the cartridge 30 from the open end to 250 to the closed end 230 and stop short of the closed end 240. In this way, whether the cartridge 30 is horizontal as shown in Figure 1, or vertical or sloping with the open end 220 uppermost, a certain volume is defined in the closed part of the cartridge 30 below the level of the perforations 250.

Referring once again to Figures 1 and 2, the cap 40 of the cartridge 30 comprises a fluid permeable structure 260. In this example, the fluid permeable structure is a mesh. The cap 40 comprises an annular flange 270 which is sized to fittingly engage within the opening 220 at the first end of the cartridge 30. The cap 40 retains the calcium carbonate chippings within the cartridge 30 when it is not installed in the housing 20. If desired, the cap 40 may be removable to allow replacement of the calcium carbonate chippings 280.

During assembly of the device 10, the cartridge 30, complete with chippings 280 and cap 40, is inserted into the housing 20, with the end cap 60 already in place, through the inlet opening 80. The other end cap 50 is then fitted into the inlet opening 80. As can best seen in Figure 2, the closed end 230 of the cartridge 30 is held in place within the housing 20 by projections 290, 300 on the end cap 60, the open end 220 of the cartridge 30 being held in place by the engagement of flange 240 with the inner surface of the housing 20.

In use, in a horizontal orientation, condensate from a condensing boiler enters the device 10 through the inlet 100 and then passes through mesh 260 into the cartridge 30 where it comes into contact with the calcium carbonate chippings 280. Because the end 230 and lower half of the cartridge is closed, it is not possible for the condensate to flow out of the cartridge until the volume of condensate within the cartridge has reached a minimum level. When the minimum volume has been reached, the condensate is able to flow from the interior of the cartridge 30 into an area 310 located between the cartridge 30 and the housing 20. The length of time that the condensate spends in contact with the calcium carbonate chippings 280 is thereby increased when compared with existing devices.

Once the level of condensate has reached at least the lowermost rows of perforations it is able to flow out of the cartridge into an area 310 between the housing 20 and the cartridge 30, and then out through the outlet 110 to the drain pipe (not shown). The closed portion of the cartridge 30 thus acts like a weir over which the condensate must flow in order to exit the device 10.

Although the device is illustrated in the Figures in a horizontal orientation, as mentioned above, the device 10 may be positioned in a vertical orientation, with the inlet opening 80 uppermost. When used in this orientation, the condensate flows into the device 10 through the inlet 100 and into the cartridge 30 via mesh 260. The condensate then fills the lowermost portion of the cartridge 30 proximate the closed end 230. When the level of condensate within the cartridge 30 reaches the lowermost perforations (at the tip of the pattern as illustrated in Figure 4) it is able to flow into area 310 and then out of the device 10 through outlet 110.

In addition to the above, the device 10 my be installed in a sloping configuration with the inlet opening 80 uppermost.

Thus, whether the device 10 including the cartridge 30 is installed in a horizontal configuration, or a vertical or sloping configuration with the inlet of the device 10 and open end of the cartridge 30 uppermost, the closed portion of the cartridge 30 is effective as a weir. Therefore, certain volume of condensate must fill the cartridge 30 and contact the chippings 280 before any condensate can flow out of the cartridge 30.

The device 10 described above may be disposable. Alternatively, the cartridge 30 and/or the chippings 280 may be replaceable.

The scope of the invention is defined by the claims which follow.

## Claims

1. A device for chemically treating condensate from a domestic boiler, comprising:
a housing having an inlet and an outlet, wherein the housing contains an agent for chemically treating the condensate; and
a weir arranged with respect to the housing so as to define a first volume within the housing which must be filled with the condensate before flow of the condensate can be established between the inlet and the outlet, wherein the weir comprises a hollow member located in the housing and having a closed end, an open end, and a side wall which extends between the closed and open ends, wherein the side wall is provided with at least one opening which is arranged to define the first volume within the hollow member and to allow the condensate to pass from the interior of the hollow member to the exterior of the hollow member when the first volume is filled with the condensate, and wherein the at least one opening is arranged to define the first volume regardless of whether the hollow member is oriented in use horizontally, vertically with the inlet uppermost, or at an angle between the horizontal and the vertical with the inlet uppermost.

2. A device according to claim 1, wherein the agent for chemically treating the condensate is located within the hollow member.

3. A device according to claim 2, wherein the hollow member is a replaceable cartridge.

4. A device according to any preceding claim, wherein the at least one opening comprises a plurality of perforations.

5. A device according to claim 4, wherein the plurality of perforations extend around less than half the circumference of the hollow member.

6. A device according to any preceding claim, wherein the agent for chemically treating the condensate comprises chips of one or more materials.

7. A device according to claim 6, wherein the agent for chemically treating the condensate comprises chips of calcium carbonate.

8. A device according to any preceding claim which is arranged to be fitted into existing pipe work.

9. A kit of parts for forming a device according to claim 1 for chemically treating condensate from a domestic boiler, comprising:
a housing having an inlet and an outlet, wherein the housing is arranged to contain an agent for chemically treating the condensate; and
a weir arranged to be located with respect to the housing so as to define a first volume within the housing which must be filled with the condensate before flow of the condensate can be established between the inlet and the outlet, wherein the weir comprises a hollow member located in the housing and having a closed end, an open end, and a side wall which extends between the closed and open ends, wherein the side wall is provided with at least one opening which is arranged to define the first volume within the hollow member and to allow the condensate to pass from the interior of the hollow member to the exterior of the hollow member when the first volume is filled with the condensate, and wherein the at least one opening is arranged to define a first volume regardless of whether the hollow member is oriented in use horizontally, vertically with the inlet uppermost, or at an angle between the horizontal and the vertical with the inlet uppermost.

10. A kit of parts according to claim 9,wherein the hollow member is arranged to contain the agent for chemically treating the condensate.

11. A cartridge for a device according to claim 1 for chemically treating condensate from a domestic boiler, the cartridge comprising a hollow member having a closed end, an open end, and a side wall which extends between the closed and open ends, wherein the side wall is provided with at least one opening which is arranged to allow the condensate to pass from the interior of the cartridge to the exterior of the cartridge only when a predetermined volume of condensate is contained within the cartridge, and wherein the at least one opening is arranged to define a first volume regardless of whether the cartridge is oriented in use horizontally, vertically with the inlet uppermost, or at an angle between the horizontal and the vertical with the inlet uppermost.

12. A cartridge as claimed in claim 11, wherein the at least one opening comprises a plurality of perforations.

13. A cartridge as claimed in claim 11 or 12, wherein the cartridge contains an agent for chemically treating the condensate.

14. A method for chemically treating condensate from a domestic boiler using a device according to claim 1, comprising:
supplying condensate to the inlet of a housing which contains an agent for chemically treating the condensate; and
preventing the condensate from exiting the housing until a predetermined volume of condensate is contained within the housing.
